# EUROPÄISCHE PATENTSCHRIFT

(11) **EP 0 717 267 B1**
(45) Veröffentlichungstag und Bekanntmachung des Hinweises auf die Patenterteilung: **11.02.1998**
(21) Anmeldenummer: 95118808.5
(22) Anmeldetag: 30.11.1995
(51) Int. Cl.: G01D 11/24, G01P 1/00

(54) **Befestigungsanordnung für einen Sensor**
Fastening device for a sensor
Dispositif de montage pour un capteur

(30) Priorität: 16.12.1994 DE 4444922
(43) Veröffentlichungstag der Anmeldung: 19.06.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Wehren, Wilhelm, D-50171 Kerpen/Blatzheim (DE)
(74) Vertreter: Messulam, Alec Moses

(56) Entgegenhaltungen:
- EP-A- 0 183 333
- DE-A- 3 434 848
- FR-A- 2 678 063

## Beschreibung

Die Erfindung bezieht sich auf eine Befestigungsanordnung für einen Sensor, der im Oberbegriff des Patentanspruches 1 erläuterten Art.

Aus der EP-PS 0 414 690 ist eine Befestigungsanordnung für einen Sensor etwa der im Oberbegriff des Patentanspruches 1 erläuterten Art bekannt.

Bei dieser bekannten Befestigungsanordnung wird ein in einer Öffnung einer Wandung einsetzbarer Sensor über einen O-Ring und einen tellerfederartigen Haltering abgedichtet und leicht lösbar in seiner Einbaulage gehalten.

Bei der bekannten Befestigungsanordnung für einen Sensor ist eine Feineinstellung der Sensorlage nicht vorgesehen und darüber hinaus muß zum Halten des Sensors zusätzlich zum tellerfederartigen Haltering ein Sicherungsring in Form von zwei Ringscheibenhälften in einer Aufnahmenut des Sensors angeordnet sein. Zur Montage und Demontage des Sensors muß dieser von beiden Seiten der Wandung zugänglich sein.

Aus der DE-PS 30 09 716 ist ein Sicherungselement für eine auf einem Gewindebolzen aufsetzbare Schraubenmutter bekannt, das aus einem federnden Blechring besteht, dessen Innenumfang einen Gewindegang bildet, der an einer Stelle unterbrochen ist.

Das bekannte Sicherungselement ermöglicht jedoch nicht ein einfaches axiales Eindrücken des zu befestigenden Bauteiles und ist auch nicht in der Lage, dieses zu befestigende Bauteil gegenüber dem es aufnehmenden Gehäuse abzudichten.

Aus der EP-A-0 183 333 (D1) ist eine Befestigungsanordnung für einen Sensor, der einen zylindrischen Schaft mit einer erweiterten Schulter aufweist und der zur Erfassung eines Meß- oder Zahlenwertes über eine Bohrung in einer Wandung eines Gehäuses einsetzbar ist, bekannt, der über einen O-Ring und einen tellerfederartigen Haltering abgedichtet und leicht lösbar gehalten ist.

Eine Feineinstellung der axialen Lage des Sensors durch eine Schraubbewegung ist hierbei nicht vorgesehen.

Aus der FR-A-2 678 063 (D2) ist eine weitere Befestigungsanordnung für einen Sensor dieser Art bekannt, der gleichfalls einen Schaft mit einer Schulter, einen O-Ring zur Abdichtung und tellerfederartige Halteringe zur Befestigung aufweist.

Auch hier ist eine der Montage nachfolgende feinfühlige Einstellung des Axialabstandes des Sensors zu einem Impulsgeberrad nicht vorgesehen.

Aus der DE-A-3 434 848 (D3) ist eine Verbindung zwischen einem Bolzen und einer Federmutter bekannt, bei der der den Gewindegang bildende Innenumfang der Federmutter mit radialen Einschnitten versehen ist.

Die Aufgabe der Erfindung ist es, eine Befestigungsanordnung für einen Sensor der im Oberbegriff des Patentanspruches 1 erläuterten Art derart zu verbessern, daß bei zuverlässiger Abdichtung eine nachträgliche Feineinstellung des Sensors ermöglicht wird und darüber hinaus eine Demontage des Sensors nur von einer Seite der Wandung her möglich ist.

Gemäß der Erfindung wird diese Aufgabe gelöst, indem bei einer Befestigungsanordnung für einen Sensor der im Oberbegriff des Patentanspruches 1 erläuterten Art, die im Kennzeichenteil des Patentanspruches 1 aufgezeigten Maßnahmen vorgesehen werden.

Dadurch, daß der tellerfederartige Haltering mit einem zylindrischen Außenumfang in einem erweiterten Absatz der Öffnung in der Wandung klemmend einsetzbar ist, wobei der tellerfederartige Haltering den O-Ring gegenüber der Schulter des Absatzes abdichtend verspannt und der tellerfederartige Haltering an seinem Innenumfang mit einem Gewindegang versehen ist, der sich klemmend am zylindrischen Schaft des Sensors verkantet, wird eine einfache Montage des Sensors durch einfaches axiales Einstecken mit einer vorbestimmten Kraft unter Verformung des tellerfederartigen Halteringes ermöglicht, worauf durch Drehen des Sensors noch eine Feineinstellung möglich wird und eine Demontage des Sensors ist in ebenso einfacher Weise durch ein Herausdrehen entlang des Gewindeganges möglich.

Die Erfindung wird anhand einer in der Zeichnung gezeigten Ausführungsform näher erläutert. Es zeigt:
- Fig. 1: einen vertikalen Schnitt entlang der Achse des Sensors in seiner Einbaulage in einer Wandung;
- Fig. 2: eine Draufsicht auf den erfindungsgemäßen tellerförmigen Haltering zum Festlegen des Sensors.

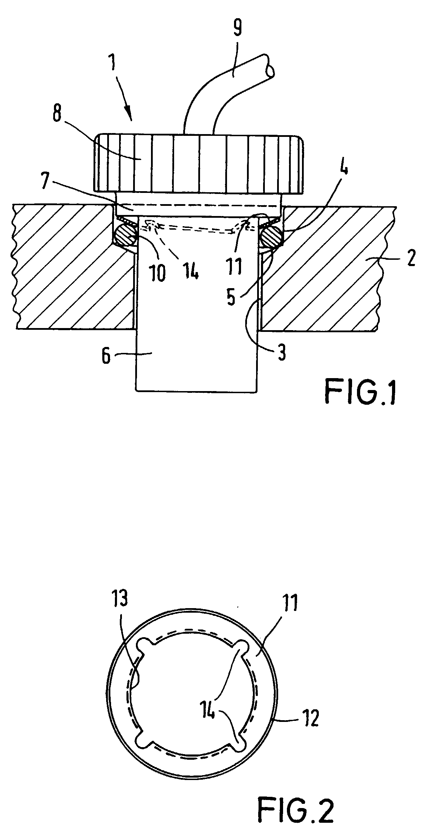

Wie aus Fig. 1 zu ersehen ist, wird ein Sensor 1 in einer Wandung 2 in einem Gehäuse eingesetzt. Die Wandung 2 weist hierzu eine Bohrung 3 mit einem erweiterten Bohrungsabschnitt 4 und einem Absatz 5 auf.

Der Sensor 1 weist einen zylindrischen Schaft 6 mit einer erweiterten Schulter 7 auf, an die sich eine nochmals erweiterte Handhabe 8 anschließt. Der Sensor 1 wird in die Bohrung 3 des Gehäuses 2 eingesetzt, um mit seinem Schaft 6 Meß- oder Zahlenwerte im Gehäuse zu erfassen, die nach außen über eine Leitung 9 zu einer Verarbeitungseinheit (nicht gezeigt) geführt werden.

Gemäß der Erfindung werden zwischen dem Absatz 5 in der Bohrung 3 und der darin einragenden erweiterten Schulter 7 des Sensors 1 ein O-Ring 10 und ein tellerfederartiger Haltering 11 angeordnet.

Die Ausbildung des tellerfederartigen Halteringes 11 wird im Zusammenhang mit Fig. 2 näher erläutert.

Der tellerfederartige Haltering 11 ist kegelförmig nach unten verformt ausgebildet und weist einen zylindrischen Außenumfang 12 und einen als einen Gewindegang ausgebildeten Innenumfang 13 auf, wobei zur Sicherstellung der Gewindefunktion der Innenumfang 13 an zumindest einer Stelle, vorzugsweise an vier Stellen durch eine Ausnehmung 14 unterbrochen ist.

Die Montage der erfindungsgemäßen Befestigungsanordnung wird nachfolgend erläutert:
Auf den Schaft 6 des Sensors 1 wird der tellerfederartige Haltering 11 mit seinem Innenumfang 13 leicht klemmend aufgesetzt und darauffolgend der O-Ring 10 aufgeschoben. Darauffolgend wird der Sensor 1 in die Bohrung 3 im Gehäuse 2 eingesetzt und zwar einfach axial hineingedrückt.

Der Außenumfang 12 des tellerfederartigen Halteringes 11 ist hierbei so ausgelegt, daß er nur klemmend in den erweiterten Abschnitt 4 der Bohrung 3 eingesetzt werden kann. Durch weiteres axiales Schieben wird der sich mit seinem Außenumfang 12 am Abschnitt 4 festklemmende tellerfederartige Haltering 11 stärker kegelförmig verformt und komprimiert hierdurch den O-Ring 10 gegenüber der Schulter 5, wodurch dieser sowohl gegenüber dem Außenumfang des Ansatzes 4 als auch gegenüber dem zylindrischen Schaft 6 abdichtet.

Der Sensor 1 wird nunmehr im Gehäuse 2 durch die sowohl nach innen (Schaft 6) als auch nach außen (Abschnitt 4) federnde Abstützung des tellerfederartigen Halteringes 11 gehalten.

Soll nun die Lage des Sensors fein eingestellt werden, so kann durch Drehen der Handhabe 8 infolge des Gewindeganges 13 eine kontrollierte Bewegung sowohl nach innen als auch nach außen vorgenommen werden.

Zum völligen Demontieren kann der Sensor 1 völlig herausgeschraubt werden.

Dadurch, daß ggf. das Gehäuse 2 und der Sensor 1 aus Leichtmetallen besteht, ist leicht zu erkennen, daß die entsprechenden federnden Verrastungen des tellerfederartigen Halteringes aus Federstahl ein sicheres Halten des Sensors ermöglichen.

## Patentansprüche

1. Befestigungsanordnung für einen Sensor (1), der einen zylindrischen Schaft (6) mit einer erweiterten Schulter (7) aufweist und der zur Erfassung eines Meß- oder Zahlenwertes, über eine Bohrung (3) in einer Wandung (2) eines Gehäuses einsetzbar ist und über einen O-Ring (10) und einem tellerfederartigem Haltering (11) abgedichtet und leicht lösbar gehalten ist,
**dadurch gekennzeichnet**, daß
- die Bohrung (3) des Gehäuses (2) einen erweiterten Bohrungsabschnitt (4) und einen Absatz (5) aufweist,
- wobei der Sensor (1) mit dem auf den Schaft (6) gegen die Schulter (7) des Sensors (1) klemmend aufgesetzten tellerfederartigen Ring (11) und dem darauffolgend aufgeschobenen O-Ring (10) in dem erweiterten Abschnitt (4) der Bohrung (3) eingesetzt wird,
- wobei der Außenumfang (12) des tellerfederartigen Halteringes (11) so ausgelegt ist, daß er nur klemmend in den erweiterten Abschnitt (4) der Bohrung (3) eingesetzt werden kann,
- wobei der O-Ring (10) zwischen dem Haltering (11), dem erweiterten Abschnitt (4) und dem Absatz (5) komprimiert wird und
- der Sensor (1) an seinem zylindrischen Schaft (6) über den einen Gewindegang (13) bildenden Innenumfang des tellerfederartigen Halteringes (11) klemmend fixierbar ist.

2. Befestigungsanordnung für einen Sensor nach Anspruch 1,
**dadurch gekennzeichnet**, daß
- der einen Gewindegang bildende Innenumfang (13) des tellerfederartigen Halteringes (11) zumindest einen, vorzugsweise vier den Gewindegang unterbrechende Einschnitte (14) aufweist.

## Claims

1. A fastening arrangement for a sensor (1) which has a cylindrical shaft (6) with an enlarged shoulder (7) and which can be inserted through a bore (3) in a wall (2) of a housing to detect a measuring or numerical value and is sealed and held in a readily releasable manner by means of an O-ring (10) and a cup-spring-like retaining ring (11),
characterised in that
- the bore (3) in the housing (2) has an enlarged portion (4) and a step (5);
- the sensor (1) is inserted, together with the cup-spring-like retaining ring (11) fitted clampingly on the shaft (6) against the shoulder (7) of the sensor (1) and the subsequently pushed-on O-ring (10), in the enlarged portion (4) of the bore (3);
- the outer circumference (12) of the cup-spring-like retaining ring (11) is designed so that it can only be inserted clampingly into the enlarged portion (4) of the bore (3);
- the O-ring (10) is compressed between the retaining ring (11), the enlarged portion (4) and the step (5); and
- the sensor (1) can be fixed clampingly at its cylindrical shaft (6) by means of the inner circumference of the cup-spring-like retaining ring (11), which constitutes a screw thread (13).

2. A fastening arrangement according to claim 1,
characterised in that
- the inner circumference (13) of the cup-spring-like retaining ring (11), which forms a screw thread, has at least one, and preferably four, cuts (14) interrupting the thread.

## Revendications

1. Dispositif de fixation pour un capteur (1) comprenant une tige cylindrique (6) avec un épaulement (7) plus large, capteur (1) qui, pour capter une valeur de mesure ou une valeur numérique, peut être inséré à travers un perçage (3) dans une paroi (2) d'un boîtier et est maintenu en place, de façon étanche et de manière qu'il puisse facilement être détaché, à l'aide d'un joint torique (10) et d'un anneau de maintien (11) semblable à une rondelle-ressort, caractérisé en ce que
- le perçage (3) du boîtier (2) présente une partie élargie (4) et une réduction (5),
- le capteur (1) est introduit dans la partie élargie (4) du perçage (3) après que l'anneau de maintien (11) a été enfilé avec serrage sur la tige (6) du capteur (1) et que le joint torique (10) a été enfilé sur la tige à la suite de cet anneau, lequel s'applique lors de l'introduction contre l'épaulement (7) du capteur (1),
- le bord extérieur (12) de l'anneau de maintien (11) a été conçu pour qu'il puisse seulement être introduit avec serrage dans la partie élargie (4) du perçage (3),
- le joint torique (10) est comprimé entre l'anneau de maintien (11), la partie élargie (4) et la réduction (5), et
- le capteur (1) peut être fixé avec serrage de sa tige cylindrique (6) par le bord intérieur, formant une spire de filet (13), de l'anneau de maintien (11) semblable à une rondelle-ressort.

2. Dispositif de fixation pour un capteur selon la revendication 1, caractérisé en ce que le bord intérieur (13) de l'anneau de maintien (11), bord qui forme une spire de filet, présente au moins une et de préférence quatre entailles (14) interrompant la spire de filet.
